Europäisches Patentamt

European Patent Office

Office européen des brevets

(11) Numéro de publication: **0 427 629 B1**

(12) **FASCICULE DE BREVET EUROPEEN**

(45) Date de publication de fascicule du brevet: **15.02.95**　(51) Int. Cl.6: **C04B 41/89**

(21) Numéro de dépôt: **90403166.3**

(22) Date de dépôt: **07.11.90**

(54) **Procédé de fabrication d'un matériau composite protégé contre l'oxydation et matériau obtenu par ce procédé.**

(30) Priorité: **09.11.89 FR 8914703**

(43) Date de publication de la demande:
**15.05.91 Bulletin 91/20**

(45) Mention de la délivrance du brevet:
**15.02.95 Bulletin 95/07**

(84) Etats contractants désignés:
**AT BE CH DE DK ES FR GB IT LI LU NL SE**

(56) Documents cités:
EP-A- 0 069 706　　EP-A- 0 200 568
EP-A- 0 247 630　　EP-A- 0 282 386
EP-A- 0 310 043　　DE-A- 1 814 579

**CHEMICAL ABSTRACTS OF JAPAN, vol. 108, no. 26, juin 1988, page 256, abrégé no.225810n, Columbus, Ohio, US; & JP-A-63 45 195 (MATSUSHITA ELECTRIC WORKS LTD) 26-02-1988**

(73) Titulaire: **AEROSPATIALE Société Nationale Industrielle
37, Boulevard de Montmorency
F-75781 Paris Cédex 16 (FR)**

(72) Inventeur: **Rousseau, Gérard
22 Hameau de Villepreux
F-33160 Saint Aubain de Médoc (FR)**

(74) Mandataire: **Mongrédien, André et al
c/o SOCIETE DE PROTECTION DES INVEN-
TIONS
25, rue de Ponthieu
F-75008 Paris (FR)**

Rank Xerox (UK) Business Services
(3.10/3.09/3.3.3)

# Description

La présente invention se rapporte à un procédé de fabrication d'un matériau composite rendu inoxydable à haute température (jusqu'à une température de 1800°C, sous une faible pression d'air) ainsi que le matériau obtenu par ce procédé.

Ce matériau est plus particulièrement destiné à être utilisé comme protection thermique de haute performance pour des véhicules spatiaux (navettes ou aéronefs) devant résister aux échauffements provoqués par le frottement de l'air lors de leur rentrée à grande vitesse dans l'atmosphère.

Toutefois, l'invention s'applique aussi dans d'autres secteurs industriels nécessitant l'utilisation de structure capable de résister à des contraintes mécaniques élevées sous des températures supérieures à 1100°C en milieu corrosif.

Les matériaux protégés contre l'oxydation auxquels s'applique l'invention sont des matériaux composites notamment du type carbone-carbone (C/C) constitués de manière appropriée de fibres de carbone noyées dans une matrice à base de carbone.

L'un des avantages essentiels des matériaux carbone/carbone est qu'ils gardent leur intégrité jusqu'à 3000°C, voir plus haut, sous chauffage rapide. Mais leur inconvénient majeur est qu'ils s'oxydent de manière importante dès 400°C en présence d'air.

Pour éviter cette oxydation, différents procédés ont été envisagés tels que la protection des matériaux composites basée sur l'utilisation d'un revêtement de carbure de silicium (SiC) formé à la surface externe des pièces carbonées.

L'utilisation de ce revêtement externe en SiC est en particulier décrit dans le document FR-A-2 611 198 (EP-A-0 282 198) déposé au nom du demandeur et dans les documents EP-A-0 133 315, US-A-3 095 316, US-A-3 406 044, US-A-3 925 577.

Les différentes techniques de dépôt d'une couche de SiC sur les matériaux composites C/C conduisent toujours à l'obtention d'une couche fissurée du fait de l'écart des coefficients de dilatation entre le carbone et le carbure de silicium. Aussi, pour remédier à cet inconvénient, on associe au revêtement externe en SiC un revêtement de silice et/ou de verre borosilicaté destiné à colmater les fissures du revêtement de SiC.

Ces colmatages fonctionnent correctement jusqu'à des températures de l'ordre de 1700°C à la pression atmosphérique. En revanche, sous pression réduite, la température de fonctionnement de ces matériaux est limitée par la réaction du $SiO_2$ sur le SiC correspondant à l'équation $SiC + SiO_2 \rightarrow 2SiO + CO$.

Afin d'assurer un colmatage des fissures du revêtement de SiC par un matériau susceptible de supporter des températures élevées sous des pressions réduites, le demandeur a envisagé de déposer sur la couche de carbure de silicium une couche externe d'oxyde choisi parmi $ThO_2$, $ZrO_2$, $HfO_2$, $La_2O_3$, $Y_2O_3$ et $Al_2O_3$ et une couche intermédiaire servant de barrière de réaction entre le SiC et l'oxyde, cette couche intermédiaire étant choisie parmi le nitrure d'aluminium et le nitrure d'hafnium en particulier. Cet agencement est décrit dans le document FR-A-2 635 773 déposé le 31 août 1988 au nom du demandeur.

La protection contre l'oxydation décrite dans ce document est tout à fait satisfaisante. Toutefois, pour certaines applications cette protection est trop complexe. En outre, elle conduit à un matériau relativement lourd. Aussi, il serait intéressant de disposer d'un matériau plus léger et plus facilement réalisable, permettant en particulier la suppression du revêtement extérieur en carbure de silicium.

On connaît aussi d'autres matériaux résistant à l'oxydation tels que celui décrit dans le document EP-A- 0 310 043. Ce matériau est à base de carbure de silicium ou de nitrure de silicium et il est protégé par un revêtement comportant une couche interne à base de nitrure d'aluminium et une couche externe d'alumine avec des compositions qui changent graduellement de façon qu'il n'existe pas d'interfaces clairement définies entre les couches et le substrat pour améliorer l'adhérence du revêtement.

L'invention a justement pour objet un procédé de fabrication d'un matériau composite protégé contre l'oxydation, dépourvu du revêtement en carbure de silicium, ainsi que les matériaux obtenus par ce procédé.

L'invention a donc pour objet un procédé de fabrication d'un matériau comportant un corps composite protégé, grâce a un revêtement externe, contre l'oxydation par l'environnement, ce corps comportant un substrat de fibres minérales, noyé dans une matrice contenant au moins 80% de carbone vitreux, pyrolytique ou graphitique, caractérisé en ce qu'il consiste à déposer directement sur le corps une couche (4) de nitrure d'aluminium puis à déposer sur la couche de nitrure d'aluminium (4) une couche externe (8) étanche, cristalline et non poreuse en un oxyde réfractaire pour former ledit revêtement externe, et à former entre le corps et la couche de nitrure d'aluminium une couche d'interface en carbure d'aluminium par chauffage du corps à une température supérieure ou égale à 600°C, soit lors du dépôt de la couche de nitrure d'aluminium, soit lors du dépôt de la couche d'oxyde réfractaire, soit dans une étape complémentaire de traitement thermique effectuée entre les deux étapes de dépôt.

Le revêtement externe sert à protéger le matériau composite sur lequel il est déposé de l'environnement extérieur. Cet environnement est en particulier une atmosphère oxydante telle que l'air.

Dans ce but, il est souhaitable que la couche d'AlN soit aussi étanche ; elle se présente sous forme cristalline. La couche d'AlN a essentiellement un rôle de barrière de réaction entre l'oxyde réfractaire et le carbone du corps composite.

Le dépôt de la couche de nitrure d'aluminium (AlN) peut être réalisé par différentes méthodes plus ou moins performantes, donnant des couches plus ou moins fissurées selon les températures de dépôt utilisées. Ce phénomène de fissuration des revêtements externes est dû aux différences de coefficient de dilatation des matériaux en présence.

En particulier, l'AlN a un coefficient de dilatation 4,5 à $5x10^{-6}/°C$, le carbone a un coefficient de dilatation de 1 à $2,5x10^{-6}/°C$ et le graphite a un coefficient de dilatation de 3 à $6x10^{-6}/°C$.

Le revêtement d'AlN est fabriqué à une température Tf toujours supérieure à la température ambiante Ta. Après refroidissement, ce revêtement est mis en contrainte de traction $\sigma_t = K(Tf-Ta)$, où K est une constante ; $\sigma_t$ est d'autant plus faible que la température Tf est faible. Les fissures seront d'autant moins nombreuses et moins larges que Tf-Ta est petit et que les coefficients de dilatation sont proches, la largeur des fissures étant directement proportionnelle à (Tf-Ta) et à la différence de coefficients de dilatation.

Lorsque l'on chauffe le matériau à une température supérieure à Tf, correspondant notamment à la température d'utilisation Tu du matériau, les fissures se referment progressivement jusqu'à la température Tf où elles s'annulent, puis le matériau est mis en compression. La contrainte en compression augmente selon la loi $\sigma_c = k(Tu-Tf)$ où k est une constante.

On voit donc que pour améliorer l'efficacité du revêtement d'AlN entre la température où le carbone commence à s'oxyder (400°C environ) et la température Tf de dépôt, il faut abaisser Tf. Ceci est possible dans la mesure où la température d'utilisation permet de ne pas provoquer, par ailleurs, la rupture de la couche en compression.

Aussi, les méthodes de dépôt utilisées pour la couche d'AlN sont celles pour lesquelles la température Tf peut être choisie.

Ainsi, on peut fabriquer le revêtement d'AlN avec une température Tf la plus basse possible, compatible avec la température d'utilisation recherchée. Ces méthodes sont essentiellement le dépôt chimique en phase vapeur (CVD) et le dépôt chimique en phase vapeur assisté par un plasma (PECVD).

Les gammes de températures de ces deux méthodes sont complémentaires. En effet, la technique PECVD est utilisée entre la température ambiante et 800°C et la technique CVD entre 600 et 1400°C. L'une ou l'autre de ces techniques peut être choisie selon l'utilisation particulière envisagée du matériau.

Le dépôt d'AlN par PECVD est réalisé avec un mélange précurseur de chlorure d'aluminium ($AlCl_3$) et d'ammoniaque ($NH_3$) et éventuellement d'azote, alors que le dépôt par CVD est réalisé avec un mélange d'$AlCl_3$ et de $NH_3$ éventuellement additionné d'hydrogène.

Bien que ces méthodes de dépôt chimique en phase vapeur soient préférées, il est possible d'utiliser la nitruration d'un dépôt d'aluminium ou le dépôt physique réactif en phase vapeur noté (PVD) réactif tel que la pulvérisation cathodique réactive et l'évaporation réactive.

La nitruration consiste tout d'abord à déposer une couche d'aluminium par pulvérisation cathodique ou évaporation sur le corps composite, puis à disposer l'ensemble dans un four de nitruration où est réalisé un chauffage progressif sous atmosphère d'azote. La nitruration commence vers 600°C puis le matériau est chauffé progressivement jusqu'à 1200°C, qui est la température où se réalise la consolidation complète de la couche de nitrure. Les couches d'AlN obtenues ont une épaisseur de 1 à 5 micromètres.

Les méthodes PVD réactives donnent lieu à des revêtements à basse température (de 20 à 600°C), généralement très minces, de l'ordre de 1 à 5 micromètres. Ces méthodes ne peuvent donc être utilisées que pour des matériaux destinés à une utilisation à basse température afin de limiter la formation des fissures par mise en compression lors de leur utilisation.

A température assez élevée (supérieure à 1000°C) l'oxygène de l'air au contact de la couche d'AlN oxyde sa surface. Il y a alors formation naturelle d'$Al_2O_3$ selon la réaction :

$$2AlN \ + \ 3/2 O_2 \longrightarrow Al_2O_3 \ ;$$

cette alumine de surface est légèrement poreuse et ralentit alors la pénétration de l'oxygène dans la couche d'AlN. Cette couche naturelle d'$Al_2O_3$ favorise la protection contre l'oxydation du matériau composite étant donné que l'alumine est un matériau résistant à la température et à l'oxydation.

Par ailleurs, lors du dépôt d'AlN à une température supérieure à 600°C, le nitrure d'aluminium réagit avec le carbone du matériau composite pour former une couche d'interface en carbure d'aluminium ($Al_4C_3$) qui favorise l'accrochage d'AlN sur le matériau assurant ainsi une bonne adhérence de cette couche d'AlN sur le carbone.

Dans le cas d'un dépôt d'AlN à basse température, à au plus 600°C, on effectue, après le dépôt, un chauffage ménagé du matériau entre 600 et 1000°C afin d'assurer la formation de cette couche d'interface. Cette étape de chauffage peut être volontaire ou bien résulter du dépôt ultérieur d'une couche de protection à haute température (>600°C).

Par ailleurs, au fur et à mesure de l'utilisation du matériau composite protégé contre l'oxydation selon l'invention, à une température supérieure à 600°C, l'épaisseur de la couche d'interface croît jusqu'à une valeur limite, de l'ordre du micromètre.

Compte tenu de cette consommation de la couche d'AlN, les techniques de dépôt par PECVD ou CVD sont préférées car elles permettent le dépôt d'une couche d'épaisseur voulue. En particulier, ces techniques permettent de déposer une couche d'AlN de 10 à 100 micromètres. L'épaisseur exacte de la couche d'AlN est fonction de son utilisation.

La formation chimique d'une couche d'interface en carbure d'aluminium d'un point de vue purement thermodynamique, ne se forme pas entre l'AlN et le SiC jusqu'à 2000°C. Ainsi, l'adhérence de l'AlN sur le corps composite du type C/C est différente de celle de l'AlN sur la structure décrite dans le document FR-A-2 635 773 cité précédemment.

La couche externe d'oxyde a pour but d'empêcher, à haute température et en particulier à pression réduite (1800°C sous 2,8 kPa ou 2000°C sous 20 KPa), la pénétration de l'oxygène de l'environnement (généralement de l'air) dans le matériau composite. Aussi, cette couche doit présenter une bonne étanchéité et une grande réfractarité. En particulier, cette couche doit être cristalline et non poreuse.

De préférence, on utilise l'alumine du fait de son meilleur coefficient de diffusion de l'oxygène. En effet, le coefficient de diffusion de l'oxygène dans l'alumine à 1200°C est de $3.10^{-16}$ cm²/s, soit 100 fois plus faible que celui de la silice qui est de $3.10^{-14}$ cm²/s. Son coefficient de dilatation est de 8 à $9 \times 10^{-6}$/°C. L'alumine déposée est l'alumine alpha.

Les méthodes de dépôt de la couche réfractaire d'oxyde sont en particulier les techniques PECVD ou CVD. Les températures de dépôt selon la technique PECVD sont comprises entre 200 et 800°C alors que les températures pour la technique CVD se situent entre 800 et 1400°C.

Les gaz précurseurs pour le dépôt d'alumine par PECVD sont le chlorure d'aluminium, l'oxygène et l'hydrogène.

Dans la technique CVD, le dépôt d'une couche d'alumine se fait par hydrolyse en phase gazeuse de chlorure d'aluminium.

L'eau d'hydrolyse est formée in situ dans le réacteur par réaction du gaz carbonique sur l'hydrogène. Les réactions mises en jeu sont les suivantes :

$$3 \, CO_2 + 3 \, H_2 \longrightarrow 3 \, CO + 3 \, H_2O$$
$$2 \, AlCl_3 + 3 \, H_2O \longrightarrow Al_2O_3 + 6 \, HCl$$

La réaction est essentiellement gouvernée par la production de l'eau responsable de l'hydrolyse du chlorure d'aluminium. Le dépôt est réalisé avec un rapport des pressions partielles d'hydrogène et de gaz carbonique proche de 1.

La pression partielle du chlorure d'aluminium est choisie assez faible, inférieure notamment à 0,5 kPa, de façon à favoriser, dans la cinétique du dépôt, la diffusion des espèces réactives par rapport à la cinétique de formation de l'alumine sur la surface. En outre, la température du matériau carboné ne doit pas être trop élevée, notamment <1100°C.

De cette façon, la vitesse de dépôt est contrôlée uniquement par la vitesse de réaction chimique à la surface du matériau.

Ces conditions permettent d'obtenir un revêtement d'alumine très uniforme et bien adhérent sur la couche d'AlN, essentiellement pourvue de son oxyde natif, grâce à sa capacité d'épouser parfaitement toutes les irrégularités de surface du matériau sous-jacent. Les valeurs des paramètres qui remplissent au mieux ces conditions sont :
- pression totale = 4 kPa,
- pression de chlorure d'aluminium = 0,1 kPa,
- température du matériau carboné : 1000°C.

L'épaisseur de la couche d'oxyde obtenue par PECVD ou CVD varie de 3 à 100 micromètres selon les conditions d'utilisation prévues pour le matériau carboné.

Lors du refroidissement du matériau composite ainsi protégé, les fissures existant dans le revêtement sous-jacent d'AlN se reforment. Elles se referment par la suite, lors de l'utilisation du matériau composite dès que la température atteint la température de dépôt de l'alumine, ici 1000°C.

Par ailleurs, lors de ce refroidissement, des fissures apparaissent dans la couche d'oxyde. Les lois régissant les fissures dans l'oxyde sont les mêmes que celles données précédemment pour l'AlN. Certaines des fissures de la couche d'oxyde externe coïncident avec les fissures de l'AlN, mais généralement elles se situent dans des zones de l'AlN non fissurées. Ces processus de fissurage dépendent des températures relatives de dépôt de chaque couche.

Les fissures dans la couche réfractaire d'oxyde se referment aussi par la suite, lors de l'utilisation du matériau, dès que la température d'utilisation dépasse la température de dépôt (en particulier 1000°C) de l'oxyde.

Bien que les méthodes de dépôt CVD ou PECVD de la couche d'oxyde soient préférées, il est possible d'utiliser d'autres techniques de dépôt comme en particulier la technique par projection plasma ou de dépôt physique en phase vapeur (PVD).

Ces techniques permettent de former des couches d'oxyde à une température basse, comme d'ailleurs la technique PECVD (température de 20 à 600°C), qui peuvent être choisies pour que le revêtement ne soit pas ou peu fissuré à froid et qu'il supporte sans s'écailler les contraintes en compression lors de son utilisation à haute température.

La projection par plasma donne des revêtements assez épais (≧100 micromètres), mais malheureusement peu étanches et les techniques PVD donnent des revêtements très minces, de 1 à 10 micromètres.

Afin d'améliorer l'adhérence de la couche d'alumine sur la couche d'AlN, il est possible de former une couche d'interface d'$AlN_xO_y$ avec $0<x<1$ et $0<y<1,5$. Cette couche peut être formée par CVD ou PECVD dans les mêmes conditions opératoires que pour l'AlN en ajoutant au mélange de gaz réactifs, soit de l'oxygène, soit du $CO_2$.

Le procédé de l'invention s'applique à tout type de matériaux composites constitués d'un substrat fibreux (de carbone, de graphite, de céramique - SiC, BN, $Al_2O_3$, etc. -) noyé dans une matrice à base de carbone (carbone vitreux, pyrolytique, ou graphitique).

Toutefois, il s'applique plus spécialement à la réalisation de matériau composite comportant un substrat de fibres de carbone ou encore en matériau réfractaire, noyées dans une matrice à base de carbone. En outre, cette matrice peut éventuellement être dopée par du carbure de silicium, du carbure ou nitrure de bore, c'est-à-dire contenir moins de 20% en particulier de 2 à 10% en poids de SiC, $B_4C$ ou BN.

La fabrication d'une matrice renfermant du SiC est décrite dans le document FR-A-2 611 198 cité précédemment. Elle consiste en particulier à imprégner le substrat fibreux sous vide par une résine phénolique du type résol sur laquelle 10% de fonctions silicones (SiO) ont été greffées chimiquement, à polymériser à chaud puis à pyrolyser à haute température (800°C environ) la résine.

En l'absence de SiC, la matrice de carbone est obtenue de façon connue par pyrolyse d'une résine thermodurcissable à haute teneur en carbone telle que les résines phénoliques, par craquage d'hydrocarbures tels que le méthane, le propane, l'éthane, le butane ou par pyrolyse d'un brai de houille, vers 800°C.

Avantageusement, chaque fibre du substrat est revêtue d'une couche mince en carbure de silicium de 100 à 200 nm d'épaisseur afin de préserver la déformabilité du substrat pour sa mise en forme lors de la fabrication d'une pièce particulière, avant de former la matrice par densification.

Cette couche de SiC sur les fibres est déposée par CVD en utilisant un mélange gazeux contenant un ou plusieurs organosilanes substitués ou non par un halogène associés éventuellement à un ou plusieurs hydrocarbures gazeux et/ou à l'hydrogène.

Les organosilanes utilisables sont en particulier les chlorosilanes de forme $(CH_3)_nSiCl_{(4-n)}$ avec $0≤n≤4$. On peut par exemple citer le trichlorométhylsilane, le tétraméthylsilane et le dichlorodiméthylsilane. Les hydrocarbures sont en particulier le méthane, l'éthane, le propane et le butane.

En particulier, on utilise un mélange de trichlorométhylsilane et d'hydrogène dans un rapport $(H_2)/(CH_3SiCl_3) = 4$ à $12$.

L'utilisation de carbure de silicium à la surface des fibres du substrat et dans la matrice permet d'assurer une protection anti-oxydation ralentissant fortement l'oxydation à coeur du matériau composite carbone-carbone en cas de destruction accidentelle de la couche d'AlN.

Selon l'invention, la surface de chaque fibre peut être pourvue d'une couche de carbone pyrolytique au contact de la couche mince de SiC revêtant ces fibres. Cette couche de carbone pyrolytique peut être déposée avant la couche de SiC des fibres ou après. Cette couche de carbone pyrolytique constitue une interface destinée à préserver, voire à améliorer, les propriétés mécaniques du matériau composite.

Cette couche de carbone pyrolytique est déposée par CVD à haute température, en utilisant l'un des hydrocarbures cités ci-dessus.

L'invention a aussi pour objet un matériau obtenu par le procédé décrit précédemment.

En particulier, l'invention a pour objet un matériau comportant un corps composite protégé, grâce à un revêtement externe, contre l'oxydation par l'environnement, ce corps comportant un substrat de fibres minérales, noyé dans une matrice à base de carbone, caractérisé en ce que le revêtement externe comporte une couche d'interface en carbure d'aluminium au contact direct du corps composite, une couche en nitrure d'aluminium au contact direct de la couche d'interface et une couche externe étanche en un oxyde réfractaire revêtant la couche de nitrure d'aluminium.

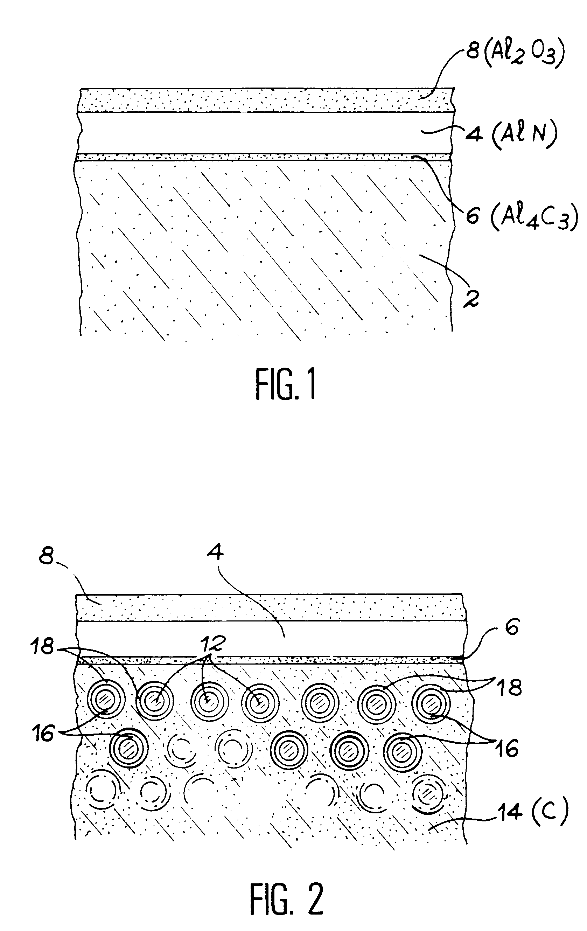

D'autres caractéristiques et avantages de l'invention ressortiront mieux de la description qui va suivre, donnée à titre illustratif et non limitatif, en référence aux figures 1 à 4 annexées représentant schématiquement, en coupe transversale, différents modes de réalisation du matériau carboné protégé contre l'oxydation, conforme à l'invention.

Le matériau représenté sur la figure 1 comporte un corps 2 en carbone pyrolytique, obtenu de façon connue par pyrolyse, dans un moule de forme appropriée, d'une résine thermodurcissable à haute teneur en carbone. Directement sur la surface du matériau, on dépose une couche de nitrure d'aluminium 4 par PECVD à une température de l'ordre de 600°C. Ce dépôt est effectué sous un vide de 50 Pa. La vitesse de dépôt est de quelques micromètres par heure. La couche d'AlN 4 a une épaisseur de 10 à 100 micromètres. Elle est étanche et est cristallisée sous forme hexagonale. Les quantités relatives de chaque gaz sont définies par les rapports suivants :

$(N_2)/(AlCl_3) = 0,8$ et $(N_2)/(NH_3) = 0,7$

Ce dépôt d'AlN s'effectuant à une température supérieure à 600°C, l'AlN réagit avec le carbone du support 2 pour former une couche 6 de carbure d'aluminium $(Al_4C_3)$.

Conformément à l'invention, on dépose ensuite sur la couche d'AlN 4 une couche d'alumine alpha 8 étanche de 3 à 100 micromètres d'épaisseur par PECVD à 500°C. La pression régnant dans l'enceinte de dépôt est relativement basse et en particulier inférieure à 50 Pa. Ce dépôt d'alumine est obtenu avec un mélange gazeux défini par les rapports :

$(AlCl_3)/(H_2) = 0,5$ et $(O_2)/(H_2) = 1.$

Le matériau ainsi obtenu est exempt de fissure, aussi bien en ce qui concerne la couche d'AlN que la couche d'alumine, et peut être utilisé jusqu'à 1300°C environ en atmosphère ou non d'oxygène de 10 à $10^5$ Pa. Au-dessus de 1300°C, le revêtement d'alumine s'écaille.

Sur la figure 2, on a représenté un matériau composite du type carbone-carbone comportant des fibres de renforcement 12 en carbone ou en graphite, noyées dans une matrice 14 en carbone graphitique. Ces fibres 12 sont tissées ou enroulées suivant deux ou trois directions et ont une épaisseur de 8 micromètres environ. Elles peuvent être courtes ou longues, de haute résistance ou de haut module.

Chaque fibre 12 est revêtue d'une couche anisotrope extrêmement mince de carbone pyrolytique 16, de 100 à 150 nm d'épaisseur. Cette couche 16 est obtenue par CVD à 1100°C dans un four où circule du méthane sous une pression de 1,5 kPa.

De plus, une couche de carbure de silicium 18 de 100 à 200 nm d'épaisseur environ protège chaque fibre 12 d'une oxydation à coeur éventuelle, en ralentissant la diffusion de l'oxygène. Cette couche de SiC est formée par CVD à 900°C en utilisant un mélange de trichloro-méthylsilane et d'hydrogène dans un rapport $(H_2)/(CH_3SiCl_3) = 8$ à une pression de 10 Pa.

Conformément à l'invention la surface externe de la matrice 14 est recouverte d'une couche étanche d'AlN 4 déposée par PECVD à 600°C puis d'une couche étanche d'alumine 8 déposée aussi par PECVD à 500°C.

Les conditions de dépôt d'AlN et d'alumine sont identiques à celles décrites en référence à la figure 1. Toutefois, la température de dépôt de l'AlN étant au plus égale à 600°C, on réalise un chauffage ménagé de l'ensemble à une température supérieure à 1000°C pour former la couche d'accrochage 6 d'$Al_4C_3$.

Ce matériau ne présente pas de fissure et peut être utilisé jusqu'à 1000°C en atmosphère d'oxygène.

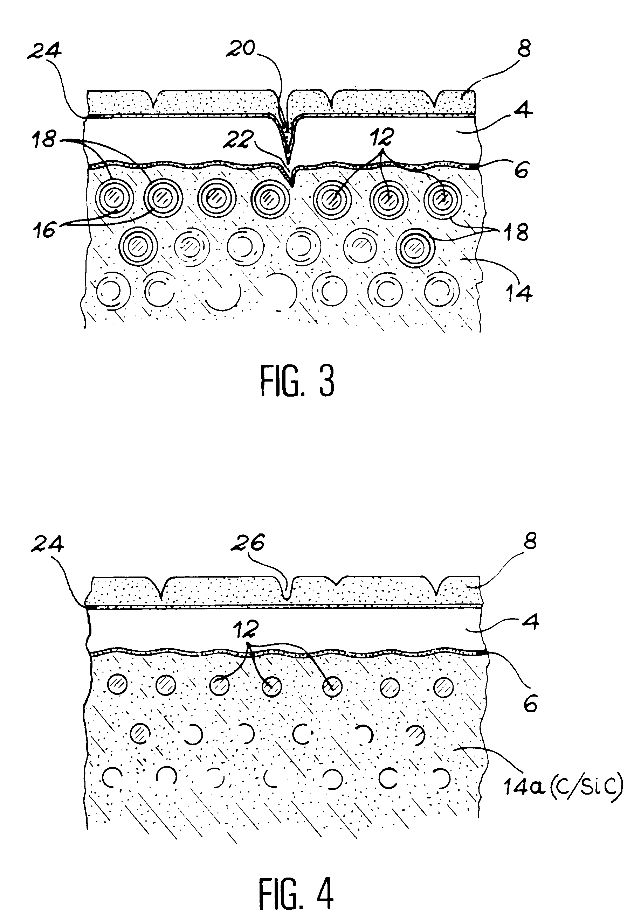

Sur la figure 3, on a représenté un autre matériau conforme à l'invention. Dans ce matériau, la couche de nitrure d'aluminium est déposée par CVD, entre 600 et 1000°C et en particulier à 950°C dans un four isotherme où circulent sous pression réduite (de 500 à 1000 Pa) de l'ammoniac, de l'hydrogène et du chlorure d'aluminium, sous balayage d'un gaz neutre tel que l'hélium ou l'argon. Les proportions des gaz sont en particulier $(AlCl_3)/(NH_3) = 10^{-1}$ et $(NH_3)/(H_2) = 0,2.$

Cette technique de dépôt CVD conduit à la formation de fissures 20 dans la couche d'AlN 4, ainsi que de fissures 22 dans la couche sous-jacente de carbure d'aluminium 6 qui sont sources de pénétration d'oxygène en-dessous de la température de fabrication. Il y a alors formation naturelle d'une couche d'alumine légèrement poreuse 24 à la surface de la couche d'AlN et dans ses fissures 20 qui ralentit la pénétration de l'oxygène.

La couche la plus externe du matériau est une couche d'alumine alpha 8 étanche déposée par CVD à une température de 600 à 1000°C et notamment à 1000°C. Ce dépôt d'alumine est effectué sous une pression réduite de 5 kPa avec un mélange de gaz contenant en volume, 1% d'$AlCl_3$, 49,5% d'$H_2O$ et 49,5% de $CO_2$.

Cet exemple correspond à un cas général avec une température d'utilisation élevée de l'ordre de 2000°C pour une pression d'air de l'ordre de 1 kPa à 100 kPa.

L'exemple de matériau représenté sur la figure 4 se différencie des modes précédents par le dépôt d'une couche d'AlN 4 par PECVD à 400°C, dans les mêmes conditions que décrites en référence à la figure 1, suivi d'un dépôt d'alumine étanche 8 par CVD à une température de 950°C. Il se différencie en outre par l'absence de couche de carbone pyrolytique et de couche de carbure de SiC sur les fibres 12.

La température de dépôt de la couche d'alumine, qui est supérieure à 600°C, conduit à la formation de la couche d'interface 6 de carbure d'aluminium.

Le dépôt d'alumine par CVD conduit à la formation de fissures 26 à sa surface pouvant entraîner une légère pénétration de l'oxygène à l'intérieur de la couche d'alumine et créer ainsi, à sa surface, une couche 24 d'alumine naturelle.

L'exemple représenté sur la figure 4 correspond à une température d'utilisation allant jusqu'à 1300°C pour une matrice de carbone.

Avec une matrice de carbone renfermant du SiC, symbolisée par la référence 14a sur la figure 4, la température d'utilisation va aussi jusqu'à 1300°C.

## Revendications

**1.** Procédé de fabrication d'un matériau comportant un corps composite protégé, grâce à un revêtement externe, contre l'oxydation par l'environnement, ce corps comportant un substrat de fibres minérales (12), noyé dans une matrice (14, 14a) contenant au moins 80% de carbone vitreux, pyrolytique ou graphitique, caractérisé en ce qu'il consiste à déposer directement sur le corps une couche (4) de nitrure d'aluminium puis à déposer sur la couche de nitrure d'aluminium (4) une couche externe(8) étanche, cristalline et non poreuse en un oxyde réfractaire pour former ledit revêtement externe, et à former entre le corps et la couche de nitrure d'aluminium une couche d'interface en carbure d'aluminium par chauffage du corps à une température supérieure ou égale à 600°C, soit lors du dépôt de la couche de nitrure d'aluminium, soit lors du dépôt de la couche d'oxyde réfractaire, soit dans une étape complémentaire de traitement thermique effectuée entre les deux étapes de dépôt.

**2.** Procédé selon la revendication 1, caractérisé en ce que l'on réalise le dépôt de la couche de nitrure d'aluminium (4) par un dépôt chimique en phase vapeur (CVD) assisté ou non par un plasma.

**3.** Procédé selon la revendication 1 ou 2, caractérisé en ce que l'on forme la couche d'interface en carbure d'aluminium lors du dépôt de la couche de nitrure d'aluminium.

**4.** Procédé selon l'une quelconque des revendications précédentes, caractérisé en ce que l'on effectue le dépôt de la couche de nitrure d'aluminium à une température de 600 à 1400°C.

**5.** Procédé selon l'une quelconque des revendications 1 et 2, caractérisé en ce que l'on forme la couche d'interface en carbure d'aluminium par chauffage du corps composite revêtu de la couche de nitrure d'aluminium à une température de 600 à 1400°C.

**6.** Procédé selon l'une quelconque des revendications précédentes, caractérisé en ce que l'oxyde réfractaire est choisi parmi $ThO_2$, $ZrO_2$, $HfO_2$, $La_2O_3$, $Y_2O_3$ et $Al_2O_3$.

**7.** Procédé selon l'une quelconque des revendications précédentes, caractérisé en ce que la couche externe (8) est en alumine $\alpha$.

**8.** Procédé selon l'une quelconque des revendications précédentes, caractérisé en ce que l'on effectue le dépôt de la couche externe par dépôt chimique en phase vapeur (CVD) assisté ou non par un plasma.

**9.** Procédé selon la revendication 7, caractérisé en ce que le dépôt de la couche d'alumine $\alpha$ est effectué par dépôt chimique en phase vapeur à une température d'au moins 950°C.

**10.** Procédé selon l'une quelconque des revendications précédentes, caractérisé en ce que le corps composite comporte un substrat de fibres de carbone (12) et en ce que l'on recouvre chaque fibre (12) d'une couche mince de carbure de silicium (16).

**11.** Procédé selon la revendication 10, caractérisé en ce que l'on recouvre de plus chaque fibre (12) d'une couche mince de carbone pyrolytique avant ou après le dépôt de la couche de carbure de silicium.

**12.** Procédé selon l'une quelconque des revendications précédentes, caractérisé en ce que l'on dope la matrice (14a) par du carbure de silicium.

**13.** Procédé selon l'une quelconque des revendications 7 à 9, caractérisé en ce que l'on forme une couche d'interface en $AlN_xO_y$ avec $0<x<1$ et $0<y<1,5$ entre la couche d'AlN et la couche d'$Al_2O_3$.

**14.** Matériau comportant un corps composite protégé, grâce à un revêtement externe, contre l'oxydation par l'environnement, ce corps comportant un substrat de fibres minérales (12), noyé dans une matrice (14, 14a) contenant au moins 80% de carbone vitreux, pyrolytique ou graphitique, caractérisé en ce que le revêtement externe comporte une couche d'interface en carbure d'aluminium (6) au contact direct du corps composite (2, 14, 14a), une couche en nitrure d'aluminium (4) au contact direct de la couche d'interface et une couche externe (8) étanche, cristalline et non poreuse en un oxyde réfractaire revêtant la couche de nitrure d'aluminium.

15. Matériau selon la revendication 14, caractérisé en ce que l'oxyde est choisi parmi $ThO_2$, $ZrO_2$, $HfO_2$, $La_2O_3$, $Y_2O_3$ et $Al_2O_3$.

16. Matériau selon la revendication 14 ou 15, caractérisé en ce que la couche externe d'oxyde (8) est en alumine alpha.

17. Matériau selon l'une quelconque des revendications 14 à 16, caractérisé en ce que le corps comporte un substrat de fibres de carbone (12), noyé dans une matrice (14a) de carbone éventuellement dopé par du carbure de silicium.

18. Matériau selon l'une quelconque des revendications 14 à 17, caractérisé en ce que les fibres (12) sont recouvertes chacune d'une couche mince de carbure de silicium (18).

19. Matériau selon la revendication 18, caractérisé en ce que les fibres (12) sont recouvertes de plus d'une couche mince de carbone pyrolytique (16).

**Claims**

1. Process for the production of a material having a composite body which, by an outer coating, is protected against oxidation through the environment, said body having a substrate of mineral fibres (12), embedded in a matrix (14,14a) containing at least 80% vitreous, pyrolytic or graphitic carbon, characterized in that it consists of depositing directly on the body an aluminium nitride layer (4) and then on the latter a tight, crystalline and non-porous outer layer (8) of a refractory oxide in order to form said outer coating, and forming between the body and the aluminium nitride layer an aluminium carbide interface layer by heating the body to a temperature equal to or above 600°C, either during the deposition of the aluminium nitride layer, or during the deposition of the refractory oxide layer, or in a complementary heat treatment stage performed between the two deposition stages.

2. Process according to claim 1, characterized in that deposition of the aluminium nitride layer (4) takes place by plasma assisted or plasma unassisted vapour phase chemical deposition (CVD).

3. Process according to claim 1 or 2, characterized in that the aluminium carbide interface layer is formed during the deposition of the aluminium nitride layer.

4. Process according to any one of the preceding claims, characterized in that the deposition of the aluminium nitride layer takes place at a temperature of 600 to 1400°C.

5. Process according to either of the claims 1 and 2, characterized in that the aluminium carbide interface layer is formed by heating the composite body coated with the aluminium nitride layer at a temperature of 600 to 1400°C.

6. Process according to any one of the preceding claims, characterized in that the refractory oxide is chosen from among $ThO_2$, $ZrO_2$, $HfO_2$, $La_2O_3$, $Y_2O_3$ and $Al_2O_3$.

7. Process according to any one of the preceding claims, characterized in that the outer layer (8) is of $\alpha$-alumina.

8. Process according to any one of the preceding claims, characterized in that the deposition of the outer layer takes place by plasma assisted or plasma unassisted chemical vapour phase deposition (CVD).

9. Process according to claim 7, characterized in that the deposition of the $\alpha$-alumina layer takes place by chemical vapour phase deposition at a temperature of at least 950°C.

10. Process according to any one of the preceding claims, characterized in that the composite body has a carbon fibre substrate (12) and each fibre (12) is covered with a thin silicon carbide coating (16).

11. Process according to claim 10, characterized in that each fibre (12) is also covered with a thin pyrolytic carbon coating before or after the deposition of the silicon carbide layer.

12. Process according to any one of the preceding claims, characterized in that the matrix (14a) is doped by silicon carbide.

13. Process according to any one of the claims 7 to 9, characterized in that an $AlN_xO_y$ interface layer is formed with $0 < x < 1$ and $0 < y < 1.5$ between the AlN layer and the $Al_2O_3$ layer.

14. Material having a composite body protected by an outer coating against oxidation through the environment, said body having a mineral fibre substrate (12) embedded in a matrix (14,14a) containing at least 80% vitreous, pyrolytic or graphitic carbon, characterized in that the outer coating has an aluminium carbide interface layer (6) in direct contact with the composite body (2,14,14a), an aluminium nitride layer (4) in direct contact with the interface layer and a tight, crystalline and non-porous, refractory oxide outer layer (8) covering the aluminium nitride layer.

15. Material according to claim 14, characterized in that the oxide is chosen from among $ThO_2$, $ZrO_2$, $HfO_2$, $La_2O_3$, $Y_2O_3$ and $Al_2O_3$.

16. Material according to claim 14 or 15, characterized in that the outer oxide layer (8) is of $\alpha$-alumina.

17. Material according to any one of the claims 14 to 16, characterized in that the body has a carbon fibre substrate (12) embedded in a carbon matrix (14a) optionally doped by silicon carbide.

18. Material according to any one of the claims 14 to 17, characterized in that each of the fibres (12) is covered with a thin silicon carbide coating (18).

19. Material according to claim 18, characterized in that the fibres (12) are also covered with a thin pyrolytic carbon coating (16).

**Patentansprüche**

1. Verfahren zur Herstellung eines Werkstoffes mit einem Verbundkörper, der durch einen Außenüberzug gegen umweltbedingte Oxidation geschützt wird und über ein Mineralfasersubstrat (12) verfügt, das in eine Matritze (14, 14a) eingebettet ist, die mindestens zu 80 % aus glasartigem, pyrolytischem bzw. Graphit-Kohlenstoff besteht; dadurch gekennzeichnet, daß sich direkt auf dem Verbundkörper eine Aluminiumnitridschicht (4) befindet, die wiederum mit einer kristallinen und porenfreien Dichtungsschicht (8) aus einem hitzebeständigen Oxid versehen ist, die den genannten Außenüberzug bildet, sowie dadurch gekennzeichnet, daß sich zwischen dem Verbundkörper und der Aluminiumnitridschicht eine Zwischenschicht aus Aluminiumkarbid befindet, die durch das Erhitzen des Verbundkörpers auf mindestens 600°C beim Abscheiden der Aluminiumnitridschicht oder beim Abscheiden der hitzebeständigen Oxidschicht bzw. in einer zusätzlichen Wärmbehandlungsstufe zwischen den beiden genannten Abscheidungsstufen gebildet wird.

2. Verfahren nach Anspruch 1, dadurch gekennzeichnet, daß das Abscheiden der Aluminiumnitridschicht (4) durch eine Gasphasenabscheidung (CVD) realisiert wird, wobei zur Unterstützung Plasma verwendet werden kann.

3. Verfahren nach Anspruch 1 oder 2, dadurch gekennzeichnet, daß die Zwischenschicht aus Aluminiumkarbid während des Abscheidens der Aluminiumnitridschicht gebildet wird.

4. Verfahren nach einem der genannten Ansprüche, dadurch gekennzeichnet, daß das Abscheiden der Aluminiumnitridschicht bei einer Temperatur von 600 bis 1400°C erfolgt.

5. Verfahren nach Anspruch 1 oder 2, dadurch gekennzeichnet, daß die Zwischenschicht aus Alumniumkarbid durch Erhitzen des mit der Aluminiumnitridschicht versehenen Verbundkörpers auf eine Temperatur von 600 bis 1400°C gebildet wird.

6. Verfahren nach einem der genannten Ansprüche, dadurch gekennzeichnet, daß das hitzebeständige Oxid aus folgenden Stoffen ausgewählt werden kann: $ThO_2$, $ZrO_2$, $HfO_2$, $La_2O_3$, $Y_2O_3$ und $Al_2O_3$.

7. Verfahren nach einem der genannten Ansprüche, dadurch gekennzeichnet, daß die Außenschicht (8) aus $\alpha$-Aluminium besteht.

8. Verfahren nach einem der genannten Ansprüche, dadurch gekennzeichnet, daß die Außenschicht durch eine Gasphasenabscheidung (CVD) realisiert wird, wobei zur Unterstützung ein Plasma verwendet werden kann.

9. Verfahren nach Anspruch 7, dadurch gekennzeichnet, daß das Abscheiden der $\alpha$-Aluminiumschicht durch Gasphasenabscheidung bei einer Temperatur von mindestens 950°C erfolgt.

10. Verfahren nach einem der genannten Ansprüche, dadurch gekennzeichnet, daß der Verbundkörper ein Kohlenstoffasersubstrat (12) umfaßt sowie dadurch, daß jede Faser (12) mit einer dünnen Siliziumkarbidschicht (16) überzogen ist.

11. Verfahren nach Anspruch 10, dadurch gekennzeichnet, daß jede Faser (12) vor oder nach dem Abscheiden der Siliziumkarbidschicht zusätzlich mit einer dünnen Schicht aus pyrolytischem Kohlenstoff überzogen wird.

12. Verfahren nach einem der genannten Ansprüche, dadurch gekennzeichnet, daß die Matritze (14a) mit Siliziumkarbid dotiert wird.

13. Verfahren nach einem der Ansprüche 7 bis 9, dadurch gekennzeichnet, daß zwischen der ALN-Schicht und der $Al_2O_3$-Schicht eine Zwischenschicht aus $ALN_xO_y$ gebildet wird, wobei folgendes gilt: $O<x<1$ und $O<y<1,5$.

14. Werkstoff mit einem Verbundkörper, der durch einen Außenüberzug gegen umweltbedingte Oxidation geschützt wird und über ein Mineralfasersubstrat (12) verfügt, das in eine Matritze (14, 14a) eingebettet ist, die mindestens zu 80% aus glasartigem, pyrolytischen bzw. Graphit-Kohlenstoff besteht; dadurch gekennzeichnet, daß der Außenüberzug folgende Schichten umfaßt: eine Zwischenschicht aus Aluminiumkarbid (6), die sich in direktem Kontakt mit dem Verbundkörper (2, 14, 14a) befindet, eine Schicht aus Aluminiumnitrid (4), die sich in direkten Kontakt mit der Zwischenschicht befindet, und eine äußere, kristalline und porenfreie Dichtungsschicht (8) aus einem hitzebeständigen Oxid, mit der die Aluminiumnitridschicht überzogen ist.

15. Werkstoff nach Anspruch 14, dadurch gekennzeichnet, daß das hitzebeständige Oxid aus folgenden Stoffen ausgewählt werden kann: $ThO_2$, $ZrO_2$, $HfO_2$, $La_2O_3$, $Y_2O_3$ und $Al_2O_3$.

16. Werkstoff nach Anspruch 14 oder 15, dadurch gekennzeichnet, daß die äußere Oxidschicht aus Alpha-Aluminium besteht.

17. Werkstoff nach einem der Ansprüche 14 bis 16, dadurch gekennzeichnet, daß der Körper ein Fasersubstrat aus Kohlenstoff (12) umfaßt, das in eine Kohlenstoffmatritze (14a) eingebettet ist, die mit Siliziumkarbid dotiert werden kann.

18. Werkstoff nach einem der Ansprüche 14 bis 17, dadurch gekennzeichnet, daß alle Fasern (12) mit einer dünnen Siliziumkarbidschicht (18) überzogen sind.

19. Werkstoff nach Anspruch 18, dadurch gekennzeichnet, daß die Fasern (12) darüber hinaus mit einer dünnen pyrolytischen Kohlenstoffschicht (16) überzogen sind.

FIG. 1

FIG. 2

FIG. 3

FIG. 4